Europäisches Patentamt

European Patent Office

Office européen des brevets

(11) Veröffentlichungsnummer: **0 232 771**

**A2**

## EUROPÄISCHE PATENTANMELDUNG

(21) Anmeldenummer: **87100948.6**

(22) Anmeldetag: **23.01.87**

(51) Int. Cl.⁴: **G02B 27/00**

(30) Priorität: **05.02.86 DE 3603544**

(43) Veröffentlichungstag der Anmeldung:
**19.08.87 Patentblatt 87/34**

(84) Benannte Vertragsstaaten:
**BE CH DE ES FR GB IT LI LU NL SE**

(71) Anmelder: **Erwin Sick GmbH Optik-Elektronik**
**Sebastian-Kneipp-Strasse 1**
**D-7808 Waldkirch(DE)**

(72) Erfinder: **Mikloweit, Falko**
**Odinstrasse 10a**
**D-8034 Germering(DE)**
Erfinder: **Ostertag, Klaus**
**Engadiner Strasse 38**
**D-8000 München 71(DE)**

(74) Vertreter: **Dipl.-Phys.Dr. Manitz Dipl.-Ing.,**
**Dipl.-Wirtsch. Finsterwald Dipl.-Chem.Dr.**
**Heyn Dipl.-Phys. Rotermund Morgan,**
**B.Sc.(Phys.) et al**
**Robert-Koch-Strasse 1**
**D-8000 München 22(DE)**

(54) Optische Abtastvorrichtung.

(57) Eine optische Abtastvorrichtung weist eine Laserdiode (14) auf, die eine Ablenkvorrichtung (13, 22) beaufschlagt, welche auf einer Abtastlinie (12) einen Abtastlichtfleck (11) erzeugt, der eine periodische Abtastbewegung ausführt. Eine Empfangsvorrichtung (20, 28) nimmt das vom Abtastgegenstand zurückgeworfene oder durchgelassene Licht auf und führt es auf einen Photoempfnger (24, 24'), an den eine Auswerteelektronik (25, 25') angeschlossen ist. Diese Elektronik gibt ein der Menge des empfangenen Lichts entsprechendes Videosignal ab. Es wird eine Laserdiode (14) verwendet, die über ein Intensitätssteuergerät (15) intensitätsmoduliert ist. Dadurch werden Abnahmen des Videosignals in Abtastrichtung, die durch systembedingte Ungleichmäßigkeiten hervorgerufen sind, im Abtast und Empfangssystem ausgeglichen.

FIG.1

## Optische Abtastvorrichtung

Die Erfindung betrifft eine optische Abtastvorrichtung mit einem Laser, der ein Spiegelrad oder einen Dreh-oder Schwingspiegel beaufschlagt, welches bzw. welcher auf einer Abtastlinie einen eine lineare Abtastbewegung ausführenden Abtastlichtfleck erzeugt, und mit einer Empfangsanordnung, die vom Abtastlichtfleck zurückgeworfenes Lichtes entsprechendes Videosignal abgibt.

Derartige optische Abtastvorrichtungen können z.B. zur Fehlersuche in Materialbahnen, als überwachende oder messende Lichtvorhänge oder auch zur Abtastung von Mustern oder Codemarken verwendet werden. Ein Problem bei derartigen, im allgemeinen mit einem streifenförmigen Hohlspiegel arbeitenden optischen Abtastvorrichtungen, wie sie z.B. in den Offenlegungsschriften 31 25 189, 28 27 705, 29 04 432 oder 29 17 875 beschrieben sind, besteht darin, daß das empfangene Videosignal auch bei gleichbleibenden Reflexionseigenschaften des abgetasteten Materials im Abtastbereich sich insbesondere an den Rändern des Abtastbereiches ändert und in erster Linie abnimmt.

Das Ziel der Erfindung besteht darin, eine optische Abtastvorrichtung der eingangs genannten Gattung zu schaffen, mit der bei gleichbleibenden Reflexionseigenschaften des abgetasteten Materials das am Ausgang der Auswerteelektronik empfangene Videosignal über den gesamten Abtastbereich konstant bleibt.

Zur Lösung dieser Aufgabe sieht die Erfindung vor, daß als Laser eine Laserdiode verwendet wird, die von einer Spannungsquelle über ein Intensitätssteuergerät derart intensitätsmoduliert ist, daß die durch die Abtastoptik bedingten Veränderungen des Videosignals, insbesondere die Abnahmen des Videosignals bei außerhalb der Mitte des Abtastbereiches befindlichem Abtastlichtfleck ausgeglichen werden.

Insbesondere soll dabei vorgesehen sein, daß die durch die Abtastoptik bedingten Veränderungen des Videosignals in einem Halbleiterspeicher festgehalten sind, dessen Leseadresse und Auslesetakt mit der Abtastfrequenz des Spiegelrades o.dgl. synchronisiert ist, und daß die aus dem Halbleiterspeicher ausgelesenen Daten über einen Digital-Analog-Wandler an den Steuereingang des Intensitätssteuergerätes angelegt sind.

Aufgrund dieser Ausbildung werden also die der durch die verwendeten optischen Bauelemente bedingten Abnahmen des Videosignals insbesondere zu den Rändern des Abtastbereiches hin entsprechenden Faktoren individuell fest in einem Halbleiterspeicher, z.B. in einem RAM eingespeichert, wo sie aufgrund einer Synchronisation mit der Abtastbewegung ständig ausgelesen und zur Steuerung der Laserdiode herangezogen werden. So wird ein bei gleichbleibenden Reflexionseigenschaften des abgetasteten Materials gleichbleibendes Empfangs-Videosignal erzielt.

Für die Zwecke der Erfindung ist eine leistungsgesteuerte Laserdiode besonders geeignet. Die erfindungsgemäße Kompensation eignet sich besonders für Abtastvorrichtungen, die bei der Inspektion von Materialbahnen verwendet werden.

Für die Zwecke der Erfindung besonders geeignet sind Halbleiterspeicher (RAM) mit mindestens 1.024, insbesondere 4.096 Worten Speichertiefe und mindestens 8 Bit, insbesondere 12 Bit Wortbreite.

Die Messung des Pegels des empfangenen Videosignals soll mit einer Auflösung von mindestens 1.024, insbesondere 4.096 Bildpunkten je Abtastung erfolgen. Durch rechnergesteuerte, iterative Änderung (Pegelmessung und Korrektur) des Speicherinhalts kann so der Signalverlauf des Videosignals in der gewünschten Weise egalisiert werden.

Die Erfindung betrifft auch ein Verfahren zum Ermitteln und Abspeichern der Modulationskurve der beschriebenen optischen Abtastvorrichtung. Diese Ermittlung ist deswegen problematisch, weil die Lichtintensität der verwendeten Laserdiode nicht linear von der angelegten Steuerspannung abhängt. Um dennoch praktisch sämtliche Unvollkommenheiten der Sende-und Empfangsoptik ausgleichen zu können, sieht die Erfindung ein Iterationsverfahren vor, welches sich dadurch kennzeichnet, daß bei Verwendung eines Abtastmediums von definierter gleichmäßiger Reflexion oder Transmission zunächst die elektrischen Empfangssignale eines Abtastzyklus in der erforderlichen Auflösung entsprechender Unterteilung in einem Hilfs-Halbleiterspeicher gespeichert werden, daß dann aus den gespeicherten Signalen eine Modulationskurve bestimmt und in dem Haupt-Halbleiterspeicher abgespeichert wird, daß dann die Laserdiode entsprechend moduliert wird, daß anschließend erneut die elektrischen Empfangssignale eines Abtastzyklus in der erforderlichen Auflösung entsprechender Unterteilung in dem Hilfs-Halbleiterspeicher gespeichert werden, daß dann aus den gespeicherten Signalen eine korrigierte Modulationskurve bestimmt und in dem Haupt-Halbleiterspeicher abgespeichert wird, daß dann die Laserdiode entsprechend moduliert wird, und daß diese Schritte solange wiederholt werden, bis die Modulationskurve sich bei der Iteration praktisch nicht mehr ändert.

Im allgemeinen wird man zur Erzielung einer für alle praktischen Zwecke ausreichenden Modulationskurve mit fünf Iterationsschritten auskommen.

Die Berechnung der Modulationskurve erfolgt zweckmäßig in einem Computer, welcher die Errechnung der Modulationskurve aus den im Hilfs-Halbleiterspeicher abgespeicherten Signale mit einer solchen Geschwindigkeit durchführen kann, daß etwa alle 100 Abtastungen der optischen Abtastvorrichtung ein Abtastzyklus im Hilfs-Halbleiterspeicher abgespeichert werden kann. Da ein Abtastzyklus, d.h. eine durchgehende Abtastung innerhalb von 0,3 bis 1 msec abläuft, kann also die im Haupt-Halbleiterspeicher abzuspeichernde Modulationskurve in etwa einer halben Sekunde durch die optische Abtastvorrichtung selbst ermittelt werden.

Besonders vorteilhaft an dem erfindungsgemäßen Iterationsverfahren ist, daß dies auch in bestimmten zeitlichen Abständen während des Betriebs der Abtastvorrichtung durchgeführt werden kann, so daß auch alterungs-oder verschmutzungsbedingte Veränderungen der Fehler von Sende und Empfangsoptik durch eine ständige Anpassung der Modulationskurve berücksichtigt werden können. Im allgemeinen werden die Zeitabstände bis zur Ermittlung einer korrigierten Modulationskurve relativ lang sein.

Die Erfindung wird im folgenden beispielsweise anhand der Zeichnung beschrieben; in dieser zeigt:

Fig. 1 eine schematische blockschaltbildartige Darstellung einer erfindungsgemäßen optischen Abtastvorrichtung,

Fig. 2 den zeitlichen Verlauf eines unkorrigierten Videosignals bei gleichmäßig Licht reflektierendem bzw. durchlassendem Abtastgegenstand bzw. Abtastmedium,

Fig. 3 den zeitlichen Verlauf der erfindungsgemäßen Leistungssteuerung, d.h. die Modulationskurve für die verwendete Laserdiode, die während jedes Abtastzyklus einmal durchlaufen wird,

Fig. 4 den zeitlichen Verlauf des gemäß der Modulationskurve nach Fig. 3 korrigierten Videosignals und

Fig. 5 ein Blockschaltbild zur Veranschaulichung des erfindungsgemäßen Iterationsverfahrens.

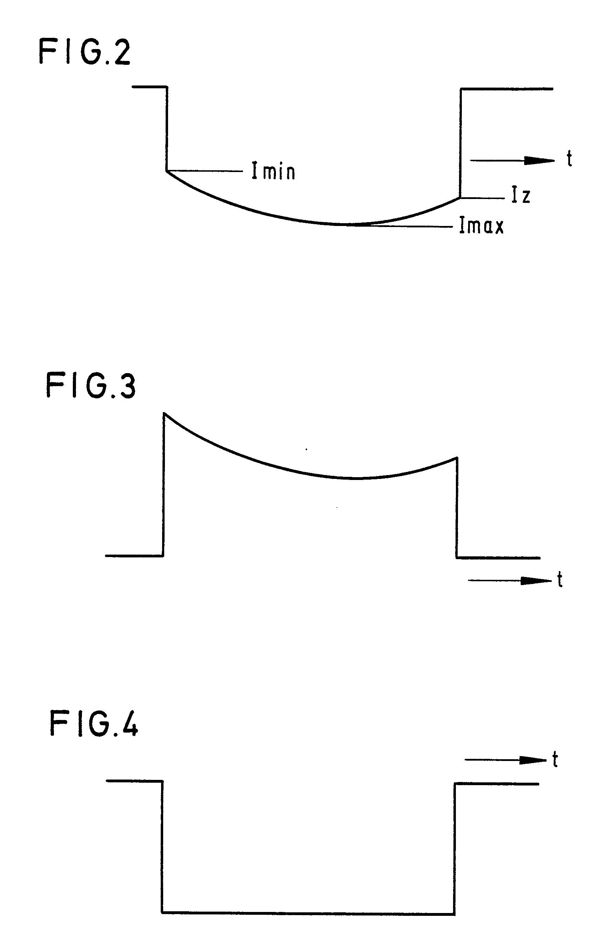

Nach Fig.1 beaufschlagt eine Laserdiode 14 ggfs. über nicht dargestellte optische Abbildungsmittel durch einen Teilerspiegel 20 hindurch ein Spiegelrad 13, welches in Richtung des dargestellten Pfeiles zu einer schnellen Drehbewegung veranlaßt wird. Die gerade getroffene Spiegelfläche des Spiegelrades 13 reflektiert den Laserstrahl 21 in Richtung eines etwas hinter der Zeichnungsebene der Fig. 1 angeordneten streifenförmigen Hohlspiegels 22, in dessen Brennpunkt sich die den Laserstrahl 21 reflektierende Fläche befindet. Der Hohlspiegel 22 reflektiert den Laserstrahl in Richtung parallel zu seiner optischen Achse 23 in Richtung einer Abtastlinie 12, welche sich z.B. auf der Oberfläche einer nicht dargestellten Materialbahn befinden kann. An dem Auftreffpunkt auf die Abtastlinie 12 erzeugt der Laserstrahl 21 einen feinen Abtastlichtfleck 11, welcher beim Umlaufen des Spiegelrades eine periodische Abtastbewegung in Richtung der Pfeile f entlang der Abtastlinie 12 ausführt, wobei er in schneller Aufeinanderfolge den gesamten Abtastbereich 17 überstreicht.

Das von dem Abtastlichtfleck 11 durch die nicht dargestellte Materialbahn reflektierte Licht gelangt teilweise auf dem gleichen Weg wie der Laserstrahl 21 zum Teilerspiegel 20, von dem das Empfangslicht auf einen Photoempfänger 24 umgelenkt wird, an den eine Auswerteelektronik 25 angeschlossen ist. Am Ausgang 26 der Auswerteelektronik 25 steht ein Videosignal an, welches für die Intensität des vom Abtastlichtfleck 11 reflektierten Lichtes repräsentativ ist.

Für den Fall, daß die optische Abtastvorrichtung mit Durchlicht arbeitet, ist hinter dem beispielsweise bahnförmigen Abtastgegenstand, auf dem die Abtastlinie 12 erzeugt wird, beispielsweise ein Lichtleitstab 28 angeordnet, an dessen einem oder beiden Enden ein Photoempfänger 24' angeordnet ist, der über eine Auswerteelektronik 25' an einem Ausgang 26' anliegt. Der Lichtleitstab 28 könnte auch so angeordnet sein, daß er das unter bestimmten Winkeln vom Abtastgegenstand reflektierte Licht aufnimmt. Die optische Abtastvorrichtung kann also mit praktisch jeder beliebigen Empfangsvorrichtung für vom Abtastgegenstand reflektiertes oder durch ihn hindurchgehendes Licht ausgestattet sein, wobei lediglich gewährleistet sein muß, daß das reflektierte oder durchgelassene Licht von jeder Stelle der Abtastlinie 12 zum Photoempfänger 24 bzw. 24' gelangt.

Befindet sich entlang der Abtastlinie 12 innerhalb des Abtastbereiches 17 ein an allen Stellen in der gleichen Weise reflektierendes bzw. gar kein Material, so entsteht am Ausgang 26 bzw. 26' der Auswerteelektronik 25 bzw. 25' während eines Abtastzyklus, d.h. während eines einzigen Überstreichens des Abtastbereiches 17 von unten nach oben in Fig. 1 ein Videosignal gemäß Fig. 2, wobei in vertikaler Richtung die Intensität und in horizontaler Richtung die Zeit aufgetragen ist. Man erkennt, daß bei Verwendung einer bestimmten Sende-und Empfangsoptik, zu der das Spiegelrad 13, der streifenförmige Hohlspiegel 22 und ggfs. der Lichtleitstab 28 gehören, das Videosignal in negativer Richtung von einem Minimalwert Imin bis auf einen Maximalwert Imax zu-und dann wieder bis auf einen geringeren Zwischenwert Iz abnimmt. Obwohl also aufgrund eines völlig gleichen Reflexionsverhaltens der Materialbahn entlang der Abtastlinie 12, abgesehen von Ungleichmäßigkeiten des Sendestrahls, überall das gleiche Reflexions- bzw. Transmissionsvermögen vorliegt, ist das am Ausgang 26 entstehende Videosignal in unerwünschter Weise nicht konstant, so daß ein unregelmäßiges Reflexionsverhalten der Materialbahn vorgetäuscht wird.

Aus diesem Grunde ist die Laserdiode 14 gemäß der Erfindung über ein Intensitätssteuergerät 15 an das vom Netz gespeiste Netzgerät 16 angeschlossen. Das Steuergerät 15 weist einen Steuereingang 27 auf, der über einen Digital-Analog -Wandler 19 von einem Haupt-Halbleiterspeicher 18 beaufschlagt ist. Durch eine gestrichelte Verbindungslinie 28 wird angedeutet, daß der Haupt-Halbleiterspeicher 18 mit der die Abtastfrequenz bestimmenden Drehbewegung des Spiegelrades 13 synchronisiert ist.

Erfindungsgemäß werden in dem Haupt-Halbleiterspeicher dem Verlauf des Videosignals nach Fig. 2 umgekehrt proportionale Steuersignale gespeichert, welche über den Analog-Digital-Wandler 19 das Steuergerät 15 so ansteuern, daß die Laserdiode 14 eine Modulationsspannung gemäß Fig. 3 während des gleichen Abtastzyklus empfängt. Am Beginn, wo das Videosignal minimal ist, erhält die Laserdiode 14 die meiste Energie, während die Speiseenergie bei Erreichen des ohne Modulation vorhandenen Minimums des Videosignals am geringsten ist.

Aufgrund dieser erfindungsgemäßen Steuerung der Lichtintensität der Laserdiode 14 wird bei gleichbleibender Reflexion bzw. Transmission an verschiedenen Stellen der entlang der Abtastlinie 12 angeordneten Materialbahn schließlich am Ausgang 26 bzw. 26′ ein korrigiertes Videosignal erhalten, wie es in Fig. 4 dargestellt ist. Das Videosignal ist also ebenso wie das Reflexions-bzw. Transmissionsvermögen im Bereich der Abtastlinie weitgehend konstant. Auch Unregelmäßigkeiten des Sendelichtstrahls am Ort des Abtastlichtflecks 11, die auf dem optischen System inhärente Unvollkommenheiten zurückzuführen sind, können so völlig auskompensiert werden.

Für die Zwecke der Erfindung genügt es, wenn der verwendete Haupt-Halbleiterspeicher 18 mindestens 1.024, typischerweise jedoch 4.096 Worte Speichertiefe und mindestens 8 Bit, typischerweise 12 Bit Wortbreite aufweist. Leseadresse und Auslesetakt sind mit der Abtastfrequenz synchronisiert.

Die Messung des Pegels der empfangenen Videosignale soll ebenfalls mit einer Auflösung von mindestens 1.024, typischerweise 4.096 Bildpunkten je Abtastung erfolgen. Durch rechnergesteuerte, iterative Änderung (Pegelmessung und Korrektur) des Speicherinhalts kann so der Signalverlauf des Videosignals egalisiert werden.

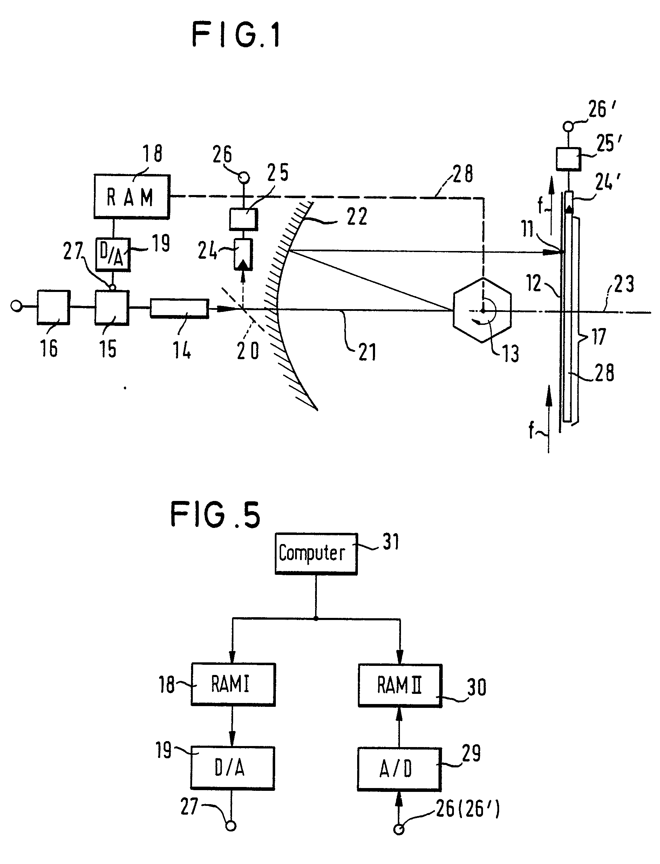

Fig. 5 zeigt ein schematisches Blockschaltbild einer Anordnung zur Ermittlung und Abspeicherung der Modulationskurve nach Fig. 3 im Haupt-Halbleiterspeicher 18. Gleiche Bezugszahlen bezeichnen entsprechende Teile wie in den vorangehenden Figuren.

Zur Ermittlung der Modulationskurve wird entweder ein Material von gleichmäßigem Reflexionsoder Transmissionsvermögen oder gar kein Material im Bereich der Abtastlinie 12 angeordnet.

Nunmehr wird die optische Abtastvorrichtung in Betrieb genommen, d.h. die Laserdiode 14 eingeschaltet und das Spiegelrad 13 in Umlauf gesetzt. Der Ausgang 26 bzw. 26′ ist an einen Analog-Digitalwandler 29 angeschlossen, an dessen Ausgang ein Hilfs-Halbleiterspeicher 30 in Form eines RAM II angelegt ist. Es werden nunmehr die Signale eines einzigen Abtastzyklus in dem Hilfs-Halbleiterspeicher 30 abgespeichert. Anschließend rechnet dann ein an die Halbleiterspeicher 18, 30 angeschlossener Computer 31 die sich aus den im Hilfs-Halbleiterspeicher 30 abgespeicherten Signalen ergebende Modulatonskurve aus und liest diese in den Haupt-Halbleiterspeicher 18 (RAM I) ein. Nunmehr wird durch den Haupt-Halbleiterspeicher 18 die Laserdiode 14 entsprechend der abgespeicherten Modulationskurve moduliert. Wegen Nichtlinearitäten der Laserdiode 14 zwischen angelegter Spannung und abgegebenem Licht werden aber durch die nunmehr erfolgende Intensitätsmodulation der Laserdiode 14 noch nicht alle Unvollkommenheiten der Sende-und Empfangsoptik auskompensiert. Aus diesem Grunde wird nunmehr erneut ein Abtastzyklus, d.h. eine einzige Abtastung im Hilfs-Halbleiterspeicher 30 abgespeichert, wobei jetzt jedoch die Abweichungen der Empfangssignale von dem erwünschten konstanten Wert wegen der bereits erfolgenden Intensitätsmodulation wesentlich geringer sind. Der Computer 31 liest anschließend diese Abweichungen aus dem Hilfs-Halbleiterspeicher 30 aus und korrigiert die im Haupt-Halbleiterspeicher 18 abgespeicherte Modulationskurve entsprechend.

Anschließend kann diese Iteration in mehreren Schritten fortgesetzt werden, wobei schließlich die im Hilfs-Halbleiterspeicher 30 abgespeicherten Empfangssignale praktisch alle gleich sind. Nunmehr kann das Iterationsverfahren beendet werden und die jetzt im Haupt-Halbleiterspeicher 18 abgespeicherte Modulationskurve kompensiert sämtliche Unvollkommenheiten der verwendeten Optik in vollkommener Weise.

Sollte sich im Verlaufe des Betriebs der optischen Abtastvorrichtung herausstellen, daß sich die optischen Unvollkommenheiten der Anordnung beispielsweise durch Alterung oder Verschmutzung verändert haben, so kann die Modulationskurve im Haupt-Halbleiterspeicher 18 jederzeit durch eine Wiederholung des Iterationsverfahrens korrigiert werden.

Abschließend ist noch darauf hinzuweisen, daß die durch Unvollkommenheiten der Optik bedingten Veränderungen des Videosignals auf die folgenden Gründe zurückgeführt werden können:

1. Abfall der Intensität zum Ende der Abtastung hin bei überleuchteter Ablenkspiegelfläche, was hauptsächlich auf die Gauss'sche Lichtverteilung der Laserdiode 14 zurückzuführen ist.

2. Lichtabfall durch Transmissionsverluste in einem Lichtleitstab (siehe z.B. DE-OS 25 08 366).

3. Intensitätsverluste durch Inhomogenitäten in optischen Bauelementen.

4. Intensitätsverluste durch unterschiedliche Auftreffwinkel auf optische Bauelemente, insbesondere Teilerspiegel.

Weiter ist noch darauf hinzuweisen, daß das Videosignal so gefiltert werden kann (Tiefpaß entsprechend der Abtastfrequenz), daß hochfrequente Materialfehler keinen Einfluß auf die Intensitätssteuerung haben.

## Ansprüche

1. Optische Abtastvorrichtung mit einem Laser, der ein Spiegelrad oder einen Dreh-oder Schwingspiegel beaufschlagt, welches bzw. welcher auf einer Abtastlinie einen eine lineare Abtastbewegung ausführenden Abtastlichtfleck erzeugt, und mit einer Empfangsanordnung, die vom Abtastlichtfleck zurückgeworfenes Licht auf einen Photoempfänger wirft, an den eine Auswerteelektronik angeschlossen ist, die ein der Menge des zurückgeworfenen Lichtes entsprechendes Videosignal abgibt, dadurch **gekennzeichnet**, daß als Laser eine Laserdiode (14) verwendet wird, die von einer Spannungsquelle (16) über in Intensitätssteuergerät (15) gemäß einer Modulationskurve (Fig. 3) derart intenstätsmoduliert ist, daß die durch die Abtastoptik und/oder Empfangsoptik bedingten Veränderungen des Videosignals, insbesondere die Abnahmen des Videosignals bei zu den Rändern des Abtastbereiches (17) laufendem Abtastlichtfleck (11) ausgeglichen werden.

2. Optische Abtastvorrichtung nach Anspruch 1, dadurch **gekennzeichnet**, daß die durch die Abtastoptik bedingten Veränderungen des Videosignals als Modulationskurve in einem Haupt-Halbleiterspeicher (18) festgehalten sind, dessen Leseadresse und Auslesetakt mit der Abtastfrequenz des Spiegelrades (13) o.dgl. synchronisiert ist, und daß die aus dem Halbleiterspeicher (18) ausgelesenen Daten über einen Digital-Analog-Wandler (19) an den Steuereingang des Intensitätssteuergerätes - (15) angelegt sind.

3. Verfahren zum Ermitteln und Abspeichern der Modulationskurve der optischen Abtastvorrichtung nach Anspruch 2, dadurch **gekennzeichnet**, daß bei Verwendung eines Abtastmediums von definierter gleichmäßiger Reflexion oder Transmission zunächst die elektrischen Empfangssignale eines Abtastzyklus in der erforderlichen Auflösung entsprechender Unterteilung in einem Hilfs-Halbleiterspeicher (30) gespeichert werden, daß dann aus den gespeicherten Signalen eine Modulationskurve bestimmt und in dem Haupt-Halbleiterspeicher - (18) abgespeichert wird, daß dann die Laserdiode - (14) entsprechend moduliert wird, daß anschließend erneut die elektrischen Empfangssignale eines Abtastzyklus in der erforderlichen Auflösung entsprechender Unterteilung in dem Hilfs-Halbleiterspeicher (30) gespeichert werden, daß dann aus den gespeicherten Signalen eine korrigierte Modulationskurve bestimmt und in dem Haupt-Halbleiterspeicher (18) abgespeichert wird, daß dann die Laserdiode (14) entsprechend moduliert wird, und daß diese Schritte solange wiederholt werden, bis die Modulationskurve sich bei der Iteration praktisch nicht mehr ändert.

4. Optische Abtastvorrichtung nach Anspruch 2 oder Verfahren nach Anspruch 3, dadurch **gekennzeichnet**, daß der Haupt-Halbleiterspeicher (18) und der Hilfs-Halbleiterspeicher (30) zwischen 1.024 und 8.192 und insbesondere etwa 4.000 Speicherplätze besitzen.

# FIG.2

Imin

Iz

Imax

t

# FIG.3

t

# FIG.4

t

# FIG.1

# FIG.5